(19) Europäisches Patentamt
European Patent Office
Office européen des brevets

(11) **EP 3 121 985 A1**

(12) **EUROPEAN PATENT APPLICATION**

(43) Date of publication:
**25.01.2017 Bulletin 2017/04**

(51) Int Cl.:
***H04L 1/20*** (2006.01)

(21) Application number: **15306194.0**

(22) Date of filing: **23.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventor: **Boussa, Sofiane
1320 Hamme-Mille (BE)**

(74) Representative: **Huchet, Anne et al
TECHNICOLOR
1-5, rue Jeanne d'Arc
92130 Issy-les-Moulineaux (FR)**

(54) **METHOD FOR IDENTIFYING A SOURCE OF NOISE, COMMUNICATION APPARATUS ADAPTED TO PERFORM THE METHOD, DATA ANALYSIS APPARATUS AND COMPUTER PROGRAM**

(57) The disclosure relates to a method for identifying a source of noise disturbing a data communication from or to a communication device (14). A communication device (14) successively measures (101) the amount of errors detected in the data communication per a defined period of time and extracts (102) error events out of the data set of the measured error values. In a further step for a set of defined criteria the characteristics of the error events are calculated (103). Then a statistical analysis of the error events is performed (104) resulting in a classification of the error events. The classification results will be compared (105) with a set of known patterns of classified error events from typical sources of noise and by determining (106) the best fitting known pattern of classified error events the disturbing source of noise (16) is identified.

Fig. 9

EP 3 121 985 A1

## Description

The disclosure relates to a method for a source of noise disturbing a data communication from or to a communication device. The disclosure also relates to a correspondingly adapted communication apparatus and data analysis apparatus. The disclosure also relates to a corresponding adapted computer program.

### Background

Internet providers who offer Internet access via Cable TV systems also called community Antenna TV" systems (CATV) are known. Examples in Germany are Kabel Deutschland or Unity Media. Since the transport medium here is a coaxial cable which is equipped with a shielding, the service is not that susceptible to impulse noise. Very widespread however are Internet providers who offer Internet access via the existing telephone cables with Digital Subscriber Line DSL, ADSL, ADSL+, ADSL2, ADSL2+, VDSL or VDSL+ technologies. Providers in Germany are Deutsche Telekom, Vodafone, United Internet (with 1&1 + Freenet), and others. Here, the transport medium is more susceptible to impulse noise since the cable made of copper normally comes without shielding, partly not even with twisted pair cabling.

These technologies suffer from noise impairments, which eventually lead to a poor DSL performance or the synchronization to drop.

There are several significant types of impairments encountered in an ADSL system: additive white Gaussian noise (AWGN), crosstalk, impulse noise, bridged taps, and radio noise. Interference that is short in duration but of a large magnitude is known as impulse noise. Impulse noise can be caused by lightning or by a motor turning on and creating a power surge. ADSL systems use a combination of interleaving and coding to correct the errors caused by impulse noise. The interleaving process rearranges data so that those samples that were located contiguously in time are spaced far apart. Impulse noise can cause a burst of errors that is hard for the decoders to correct. The use of interleaving combined with coding spreads out these errors in time to improve decoding performance. Impulse noises can drastically impact the internet service especially real time media, such as video and/or audio streaming, in particular the Internet TV service. There are several techniques in existence which are used to protect the data against errors, correct them in case of errors which occurred or retransmit the affected data. Those techniques include but are not limited to Trellis Coding, Forward Error Protection FEC, and Interleaving.

A good overview about such error protection techniques is known from the ADSL Theory article published in Internet on May 2008 under the link: http://dewanoad.blogspot.de/2008/05/adsl-theory.html

### Summary

While the known error protection techniques are quite powerful, there is still the problem that impulse noise may occur and corrupt some data for which then retransmission is needed, which leads to a lower throughput and consequently to a problematic DSL performance. The customer at his premises then is dissatisfied and will complain about the DSL service.

In that situation there is a need for the provider to figure out what the problem is and how to solve it. Impulse noise typically is caused by a great variety of electric machines such as dish washer, washing machine, clothes dryer, refrigerator, vacuum cleaner, microwave oven, water kettle, hair dryer, power tools, etc. which are located close to the DSL line.

It is therefore an object of the disclosure to provide for a diagnostics and analysis tool which is capable to allow Internet Service Providers to analyze errors, caused by impulse noise in or close to the customer premises, within a time window. With such a tool the provider could inform the customer about what kind of disturbing device probably causes the problem for a poor DSL performance in his premises.

This and other objects are solved with a method according to the independent claim 1. A corresponding communication apparatus adapted to perform the method according the invention is claimed in claim 6. A corresponding data analysis apparatus is claimed in claim 8 and a corresponding computer program is claimed in claim 9.

The disclosure proposes a method that analyzes errors due to noise impairments on DSL lines. This method is based on a statistical Principal Component Analysis (PCA) method that can classify data into different groups according to predefined criteria.

With this type of statistical method (Principal Component Analysis), it is possible to group the occurred errors according to a set of defined criteria. The aim is to find the right adaptation of the statistical method such that there is a classification of the errors in few groups where errors that come from the same root cause will be sorted in the same group. Finally, according to the invention the groups will be compared to existing error statistics analysis results for typical impulse noise generating disturbers. At the end of the process either a network analysis tool at the service provider can identify the root cause of the errors and the customer will be informed accordingly or it is the CPE which generates such a message to the customer itself.

This way the customer will be quickly informed about the reason of a poor Internet or telephone service and can eliminate the root cause of the problem to get back a higher throughput and better service. Customer satisfaction therefore will also be increased. Additionally, a visit of a technician at the customer's premises for solving the problem with a poor service can be avoided.

Another advantage of the method is that it maintains a higher data throughput. Further, radio emissions from the network are reduced.

The dependent claims contain advantageous developments and improvements to the method and devices according to the disclosure.

Drawings

Exemplary embodiments of the present disclosure are shown in the drawings and are explained in greater detail in the following description.

In the drawings:

Fig. 1 shows the principle system architecture of a DSL transmission system according to the disclosure;

Fig. 2 illustrates the frequency bands on which the DSL communication happens;

Fig. 3 shows a block diagram of a DSL modem / router / gateway;

Fig. 4 illustrates which network layers are involved in the communication over the DSL lines;

Fig. 5 shows the typical constellation diagrams used for the communication over DSL lines;

Fig. 6 illustrates the occurrence of DeltaCV errors detected for data received in downstream direction to the CPE;

Fig. 7 illustrates three characteristic criteria of a DeltaCV error event caused by impulse noise;

Fig. 8 illustrates a grouping result of the different error events after applying the PCA method, and;

Fig. 9 shows a flow chart for the software that performs the error analysis according to the disclosure.

Exemplary embodiments

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

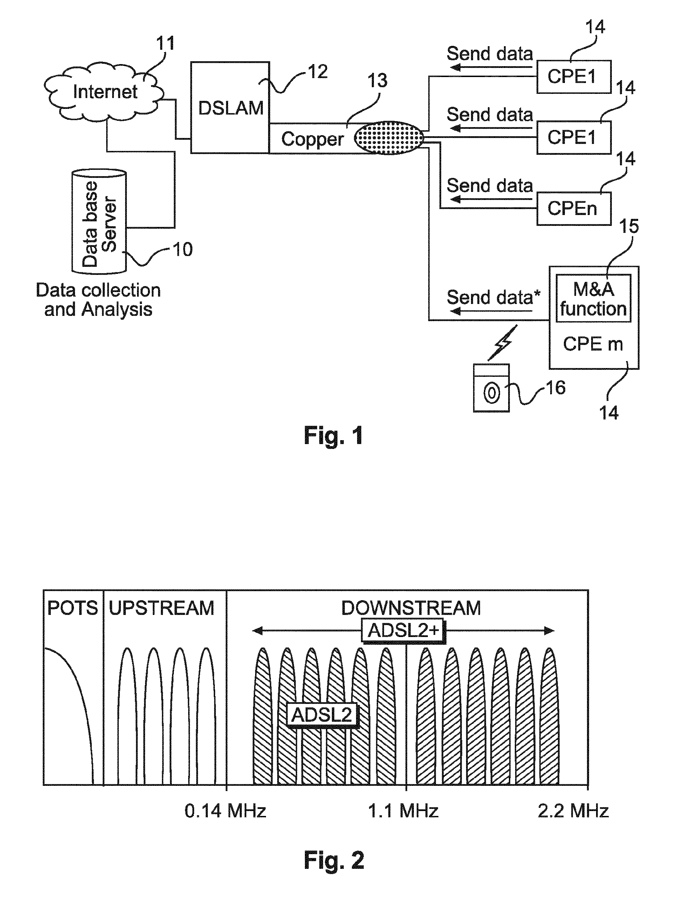

ADSL operates within the existing POTS (Plain Old Telephone Service) plant structure. The principle system architecture of a DSL transmission system is illustrated in Fig. 1. A data base server 10 is located at the site of the service provider. The server 10 receives data from the customer gateways / routers 14 via Internet 11. The last mile to the homes of the customers begins at the place where the DSLAM 12 (Digital Subscriber Line Access Multiplexer) is located. The Internet traffic arrives at the DSLAM 12 via fiber cable. The DSLAM 12 contains a bank of the same kind of digital signal processor as the ADSL router. For each CPE 14 which is served by the DSLAM 12 there is one DSP at the DSLAM 12. There is also some network and phone interfacing equipment in the DSLAM.

The last mile to the customers is bridged with telephone cable 13 as illustrated in Fig. 1. That cable contains a pair of copper lines for each customer. Standard copper twisted pair is the primary medium for connecting the homes to the DSLAM 12. It is illustrated that the last CPE m contains an M&A function section 15. It is this M&A function section which is according to the disclosure. Further illustrated is that close to the CPE m a washing machine is radiating disturbing electromagnetic signals which penetrate onto the DSL lines to which the CPE m is connected.

The PHY of ADSL uses a multicarrier modulation technique known as discrete multitone (DMT). A DMT system transmits data on multiple subcarriers in a manner very similar to the orthogonal frequency demodulation (OFDM) technique that is used in many wireless applications. A DMT modulator takes in N data symbols in parallel and transmits the symbols on N subcarriers. Disregarding other techniques where the data rate is specifically adapted to the characteristics per subcarrier, the data rate on each subcarrier is then $^1/_N$ the original data rate. The channels on which the DSL communication happens are illustrated in **Fig. 2.** In ADSL technology there are 256 independent channels of 4 kHz width, each. Channel 0 is used for POTS. Channels 1 to 5 are not used. Some channels are used for the upstream direction and the remaining channels are used for the downstream direction. A 50-50 mix of upstream and downstream channels is possible, but most providers allocate something like 80-90% of the bandwidth to the downstream channels since most users download more data than they upload.

Reducing the data rate results in a DMT symbol period that is N times as long as the original symbol period. Increasing the symbol period can make the symbol longer than the time span of the channel. This situation can make it easier to combat the effects of intersymbol interference.

The DMT signal is formed by using an Inverse Fast Fourier Transform technique (IFFT) to generate orthogonal subcarriers at the transmitter.

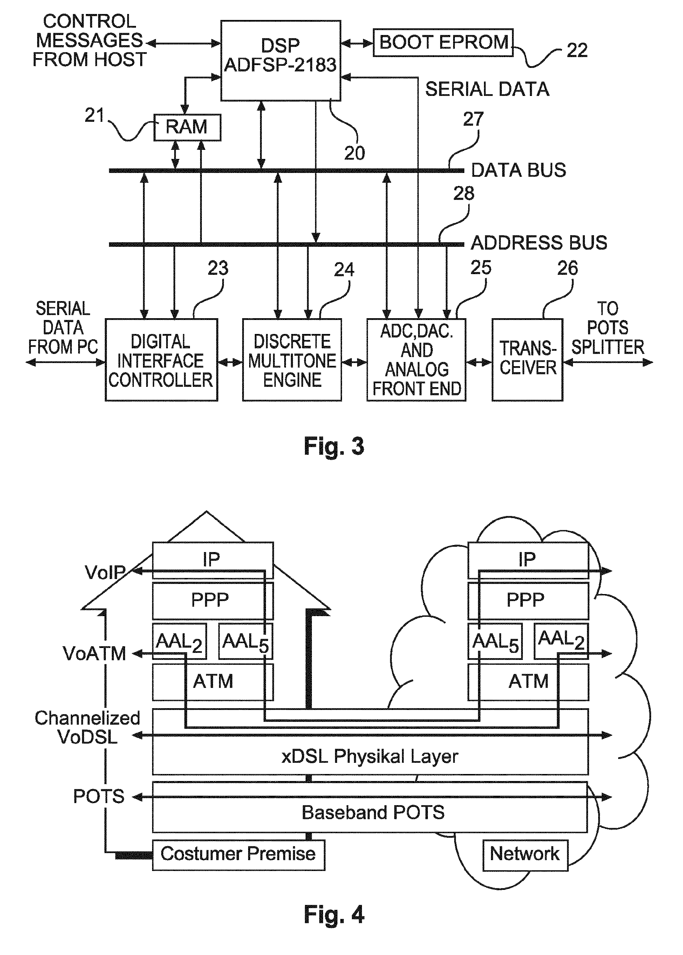

The block of IFFT output samples is known as a DMT symbol. This time-domain signal is transmitted across the channel, and a Fast Fourier Transform technique FFT is used at the receiver to bring the signal back into the frequency domain. A block diagram of a typical ADSL transmitter/receiver pair is shown in **Fig. 3.** The DSL router 14 is equipped with a powerful digital signal processor DSP 20. That processor performs the majority of tasks including implementing the network protocol stack and performing error detection, error monitoring, error correction, and error analysis. The DSP 20 has access to a RAM memory 21 and a boot EPROM memory 22. The DSP 20 is connected to further components via a data bus 27 and address bus 28. These further components include digital interface controller 23, DMT engine 24, ADC, DAC and Analog front end 25, and transceiver circuit 26.

The dynamic bit allocation technique allows DMT to make efficient use of the available channel capacity. This technique enables the system to vary the number of bits per symbol for each subcarrier based on the subcarrier's signal-to-noise ratio (SNR). Subcarriers with a low SNR transmit binary phase-shift keying (BPSK) or quadrature PSK (QPSK) because they are robust modulation formats. If the subcarrier's SNR is very low, that subcarrier will not be used to transmit data at all. Subcarriers with a higher SNR transmit higher-order quadrature amplitude modulation (QAM) in order to achieve an increased throughput.

Convolutional codes are good at correcting random errors. However, the nature of the decoding algorithm is such that the decoder can cause burst errors to occur if errors are made during the decoding process.

A Reed-Solomon block code is used on top of the convolutional code. Reed-Solomon codes are powerful codes that are good at detecting and correcting burst errors. The ADSL specification allows Reed-Solomon code-word lengths of up to 255 bytes with the addition of up to 16 parity bytes for each code word. The outermost code is a cyclic redundancy check (CRC) code. The CRC can detect errors, but it cannot correct them. The CRC code is used as a top-level error-detection mechanism in order to detect any errors that remain after Viterbi and Reed-Solomon decoding.

Because a bundled telephone cable contains many wires for many different users, crosstalk is a common impairment. These wires radiate electromagnetically and can induce currents in other wires in the cable. This interference effect is known as crosstalk. There are two basic types of crosstalk and they both appear at the receiver as additive noise.

The residence modem also contains several other blocks. A hybrid simultaneously connects the transmitter and receiver to the same copper wire. The hybrid contains the line conditioning and gain control for proper operation over a range of signal levels.

The digital circuits connected to the DAC and ADC converters contain the signal processing and memory necessary to perform the demodulation and data conversion to get the information from the phone wire to the home device.

ADSL is a standardized protocol. In 1998, agreement was reached on a set of standards for ADSL. G.992.1 is part of a suite of standards (the G.99x.x series) covering several DSL systems as well as protocols and tests.

When an ADSL termination unit-residence (ATU-R), or modem, is first connected to a DSL network, it goes through a fairly extensive initialization process. This process identifies and qualifies both the capabilities of the network equipment and of the underlying physical infrastructure.

The initialization process consists of four major phases. The first phase is a handshake using the G.994.1 or G.hs protocol (G.hs is a precursor to the G.992.1 specific initialization and is used by other DSL and telecommunication devices). The remaining three phases - transceiver training, channel analysis, and exchange - are covered directly in the G.992 standard and apply specifically to standards-based ADSL networks.

The G.994.1 handshake is used to determine the nature and capabilities of the endpoints and to indicate which protocol will be used for the remainder of the initialization. The signaling method used for the handshake interchange is designed to be robust. Biphase shift keying (BPSK) modulation is used to modulate multiple single-tone subcarriers, all carrying the same data. The handshake has several possible variants, but, fundamentally, the two endpoints exchange a message which contains information about the endpoint type, and a number of related subparameters such as the frequency range and number of DMT subcarriers supported.

The second phase of initialization is transceiver training. Receivers at each end of the line acquire the DMT symbol stream, adjust receiver gain, perform symbol timing recovery, and train any equalizers. There is an optional echo cancellation training step that can also be performed during this phase, but the specification does not define the training signal to be used.

The third phase of initialization is characterization. The transmitter power at each end of the line is set to a predetermined level at this phase, allowing a preliminary estimate of loop attenuation by the receivers. The received upstream power level is reported back to the ATU-R transmitter to allow limited power level adjustment (attenuation), if needed, to meet spectral mask requirements.

In the third phase, the transceivers exchange capability information and perform detailed channel characterization. For example, the ADSL termination unit-CO (ATU-C) specifies the minimum SNR margin for the system and whether it can support functions such as trellis coding and echo cancellation. Similar information is exchanged about the ATU-R. Although some of these same parameters were exchanged during the G.994 handshake, the handshake message parameters are used to gather information only and are not necessarily used for the connection. During this third phase, both transceivers attempt to measure specific channel characteristics such as unusable subcarriers, loop attenuation on a per subcarrier basis, SNRs, and any other channel impairments that would affect the potential transmitted bit rates. Based on the discovered channel characteristics, the ATU-C makes the first offer of the overall bit rates and coding overhead that will be used for the connection. Four possible rates are offered, in decreasing order of preference. All subcarriers are modulated simultaneously with the same information. The primary tool for channel measurement is a pseudo-random bit sequence.

Along with TCP/IP, ATM, with its key layers and its relationship with ADSL, is one of the key enabling technologies for broadband applications using ADSL. ADSL uses a framed transport structure in which frames are encoded and modulated into DMT symbols. The ADSL frames can be further grouped into superframes, each consisting of 68 frames. An ADSL frame is sent every 250 microseconds, therefore a superframe is sent every 17 ms.

The basic idea behind ATM is to transmit all information in small, fixed-size packets called cells. The cells are 53 Bytes long, of which 5 Bytes are header and 48 Bytes are payload. The cells' small size allows the efficient multiplexing of data from multiple sources. Cell routing is done in hardware, at high speed. Variable-length IP packets have to be routed by software, which is a slower process. Small cells do not block any line for very long, which makes guaranteeing quality of service easier. ATM is connection-oriented - once a connection is established, the connection carries traffic that meets the quality of service (QoS) requirements requested by the source and destination. ATM, in contrast to IP protocol guarantees never to deliver cells out of order.

The network layers involved in the communication over the DSL lines are illustrated in **Fig. 4.** The ATM and ATM adaptation layer (AAL) are the two most important of the several layers in the ATM protocol stack. The ATM layer deals with cells and cell transport. The ATM layer is responsible for the definition of logical connections through the network. Logical connections in ATM are known as virtual circuits (VCs).

The AAL is responsible for inserting higher-layer information into cells to be transported over the network. It allows sending packets larger than a cell. It consists of two sublayers called the segmentation and reassembly (SAR) sublayer and the common part convergence sublayer (CPCS). The SAR sublayer segments the upper-layer protocol data units (PDUs) into 48-Bytes cell payloads (SAR PDUs). The SAR PDUs are then passed to the ATM layer to form a complete cell. The CPCS is responsible for performing functions for different classes of service. These are referred to as AAL1-5. AAL5 is most often used for connectionless Internet traffic, as it allows the entire 48 Bytes of cell payload to transport data with minimal overhead. For Internet traffic, the Point-to-Point Protocol is used for the connection setup in dial-in networks such as the DSL network. IP stands for the well-known Internet Protocol.

As shown in Fig. 1, the CPEm 14, which has the Measurement and Decision function 15, collects the measured data, performs the analysis and sends the result to the data base server 10.

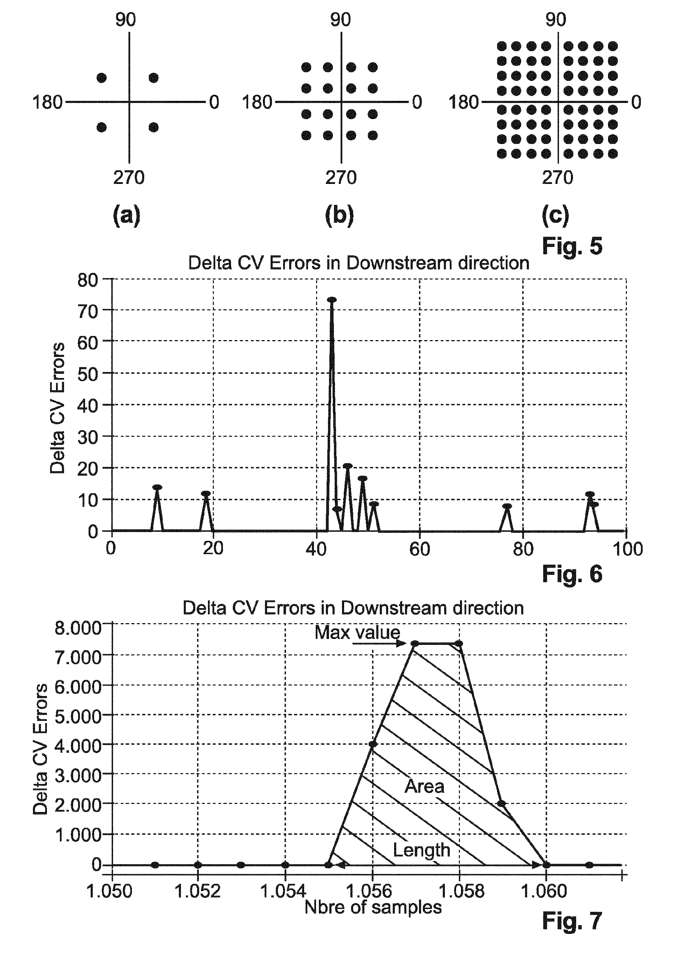

In DSL technology, QPSK or QAM modulation schemes are used. Fig. 5 shows the constellation diagrams for QPSK modulation at a), for 16 QAM modulation at b), and for 64 QAM modulation at c). These are the legal combinations of signal amplitude and phase. With many points in the constellation diagram, even a small amount of noise in the detected amplitude or phase can result in an error and many corrupted bits. To protect against disturbances and noise, in ADSL2 technology Trellis coding is used in addition which means that some bits of each symbol are parity bits. With these parity bits it's possible to detect code violations CV in the signal received in downstream direction and also in the signal that is transmitted in upstream direction.

The data collected are CV (Code Violations) errors. These values are collected from CPE 14 or CO counters every time period T (T is a time frame window selected by the user). The CV counters are measured at the physical layer of the CPE/CO software.

A DSL modem is equipped with a number of status counters:

- FEC counter - Forward Error Correction - packets with errors that have been fixed.
- CV or CRC counter - Code Violation or Cyclic Redundancy Check counter which counts packets which have to be retransmitted due to detected errors.
- ECS counter - Error Corrected Seconds counter, counts the number of seconds in which an FEC error occurred.
- ES counter - Error Seconds counter - counts the number of seconds in which a CV/CRC error occurred.
- SES - Severely Error Seconds counter - counter of the number of seconds in which 10 or more CV/CRC occurred.
- UAS - UnAvailable Seconds - number of seconds that the connection wasn't able to transmit.

- LOS - Loss of Signal Seconds - number of seconds that the DSL signaling has been lost.

These counters are administered with the DSP 20 and could be located in RAM memory.

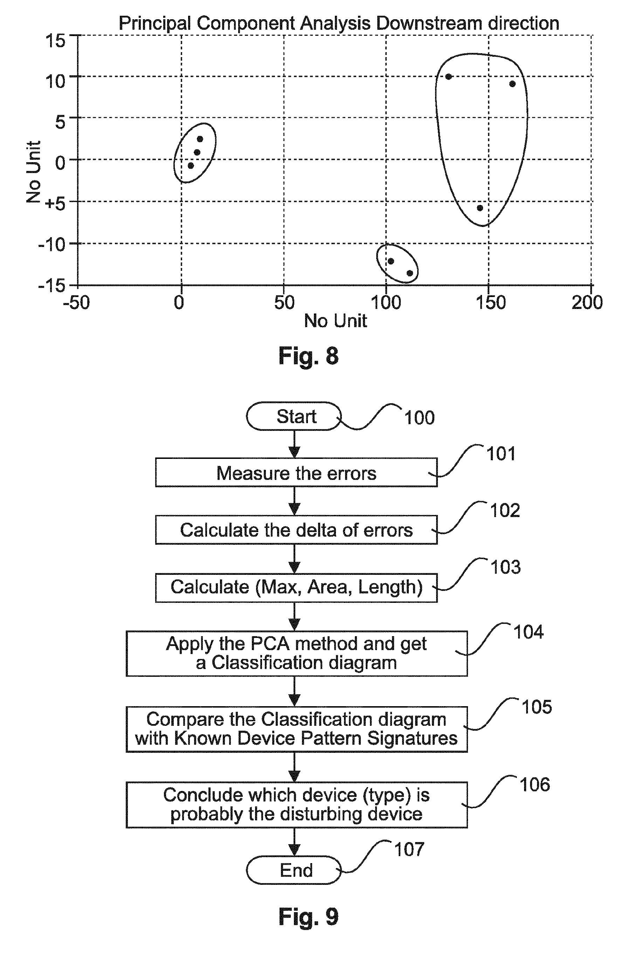

The flow chart in **Fig. 9** explains the steps of the classification and identification of the noise disturbing source. This programs starts in step 100. First, in step 101 the CV errors are collected every period (T). Then in step 102 the algorithm calculates the difference between the actual CV errors in period T and the previous one in period T-1, following the equation:

$$DeltaCV = CV(T) - CV(T-1).$$

**Fig. 6** shows an example of DeltaCV errors in downstream direction recorded every T=10s. Each single DeltaCV or a succession of DeltaCVs is considered as an Event. As seen in Fig. 6, within 100 measurement points 10 DeltaCV error events occurred.

The next step 103 is to apply some criteria for sorting the DeltaCV error event data, here in a concrete approach three criteria are defined to an Event, which are: max value, length and area of the event (see **Fig. 7**). It is obvious that these criteria will represent the impulse noise behavior.

In order to classify/group these events according to the simplified criteria, a statistical method (Principal Component Analysis) is used. The mathematical operations such as calculation of the covariance matrix, calculation of the matrix eigenvalues, and transformation of the samples onto the new basis are calculation techniques which are known to the skilled person. For example to calculate the eigenvalues of a matrix, the Gauß-Seidel or Jacobi process could be employed. For the details of the mathematics it is referred to mathematical textbooks or encyclopedias like the entry for Principal Component Analysis in Wikipedia.

In principle the mathematical algorithm consists in a transformation from n dimensions to m dimensions, where m < n. The system designer needs to define a plurality of characteristics for an error event. For example the three criteria (Max Value, Area and Length) will be used for characterising an error event.

The basic steps of this calculation algorithm are listed below:

1- Calculate the mean value for each of the selected criteria

$$M_i = \frac{1}{N} \sum_{k=1}^{k=N} E_{i,k},$$

where M is the mean value, i is representative to the criteria (here, Max Value, Area and Length) and N is the number of samples.

2- Calculate the Covariance Matrix noted **C**. C is a 3 X 3 matrix.

3- Calculate the matrix eigenvectors noted V and the corresponding eigenvalues noted D.

4- Sort the eigenvectors matrix **V** and eigenvalues D by decreasing eigenvalues. The smaller the eigenvalues are, the less is the influence of the corresponding criterion on the DeltaCV error event.

5- Calculate a new eigenvector matrix noted **W** according to a subset of eigenvectors. Here, some smaller eigenvalues will be omitted. In the present example **W** is a 3 X 1 matrix so that two eigenvalues would be omitted.

6- Transform the samples onto the new basis $T = W^T.X$ (**X** is the samples matrix). In one embodiment of the disclosure, the matrix $W^T$ is a 1 X 3 matrix. Then **T** is a 1 X 8 matrix.

$$X = \begin{bmatrix} E_{1,1} & \cdots & E_{1,k} \\ E_{2,1} & \cdots & E_{2,k} \\ E_{3,1} & \cdots & E_{3,k} \end{bmatrix}.$$

With the resulting matrix **T** the grouping of a DeltaCV error events is found.

**Fig. 8** shows an example of results for a test with only 8 samples of DeltaCV error events. The resulting values of the matrix T are shown in the diagram of Fig. 8. It shows the resulting graph if the three criteria (Max Value, Area and Length) are used as input characteristics in the PCA. Three groups are distinguished which represent three different noise sources. For further details on the Principal Component Analysis it is also referred to the Wikipedia article about the German expression "Hauptkomponentenanalyse" and/ or the English language expression "principal component analysis".

After this classification is completed, the algorithm compares the results to existing patterns that represent known sources of noise. The different patterns for different sources of noise could be downloaded from the data base server 10 during an initialization phase of the DSL router. According to this comparison, the algorithm decides which device (type) is probably the disturbing source. In the example of Fig. 1 the disturbing device will be identified as being of the type of a washing machine. Corresponding information is brought to the attention of the user on the computer monitor as a result of the error analysis.

The disclosure is not restricted to the exemplary embodiments described here. There is scope for many different adaptations and developments which are also considered to belong to the disclosure.

In a further embodiment the functionality of error data analysis is outsourced to the data base server 10 located at the premises of the Internet Service Provider ISP. I.e. the communication apparatus 14 still measures the code violations every time period T but will send the collected error values to the data base server 10. At the server 10 there is an error data analysis tool which performs the steps of extracting error events out of the data set of the measured error values; calculating for a set of defined criteria the characteristics of the error events; performing a statistical analysis with the error events resulting in a classification of the error events; comparing the classified error events with a set of known patterns of classified error events from typical sources of noise; and determining the best fitting known pattern of classified error events for identifying the disturbing source of noise as described in the first preferred embodiment. This way the DSP 20 in the communication apparatus 14 is freed from the data analysis task and has a greater resource capacity available for other tasks. Of course, the ISP needs to make sure that the analysis result is reported back to the communication apparatus 14 such that the customer will be informed about which device is presumed to cause the problem of a poor Internet service.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

**Claims**

1.  Method for identifying a source of noise (16) disturbing a data communication from or to a communication device (14), **characterized by** successively measuring (101) the amount of errors detected in the data communication per a defined period of time; extracting (102) error events out of the data set of the measured error values; calculating (103) for a set of defined criteria the characteristics of the error events; performing (104) a statistical analysis with the error events resulting in a classification of the error events; comparing (105) the classified error events with a set of known patterns of classified error events from typical sources of noise; and determining (106) the best fitting known pattern of classified error events for identifying the disturbing source of noise (16).

2.  Method according to claim 1, wherein for extracting error events, the difference between the measured error value in the time interval T to the measured error event in the previous time interval T-1 is calculated.

3.  Method according to claim 1 or 2, wherein the set of defined criteria comprises the maximum value, the length, and the area of the error event.

4.  Method according to one of the previous claims, wherein the statistical analysis is performed in the form of a principal component analysis.

5.  Method according to one of the previous claims, wherein the defined period of time for measuring the amount of errors is in the range of 1 to 100 seconds.

6.  Communication apparatus comprising a processor being adapted to perform a method according to one of the previous claims.

7.  Communication apparatus according to claim 6, **characterized in that** it is at least one of a DSL modem, cable modem or wireless communication modem.

8. Data analysis apparatus (10) adapted to receive from a communication apparatus (14) successively measured error values detected by the communication apparatus (14) in the data communication from or to the communication apparatus (14) per a defined period of time and adapted to perform:

   extracting error events (102); calculating (103) error event characteristics; performing (104) a statistical analysis; comparing (105) classified error events; and
   determining (106) the best fitting known pattern of classified error events according to the method of one of the claims 1 to 5.

9. Computer program comprising computer-executable instructions when run in a computer system adapted to cause the computer system to perform the method of one of claims 1 to 5.

Fig. 1

Fig. 2

CONTROL
MESSAGES ←——→ DSP ←——→ BOOT EPROM ~ 22
FROM HOST ADFSP-2183

SERIAL DATA

21 ~ RAM 27

20 DATA BUS

28

ADDRESS BUS

23 24 25 26

SERIAL
DATA ←→ DIGITAL ←→ DISCRETE ←→ ADC,DAC. ←→ TRANS- ←→ TO
FROM PC INTERFACE MULTITONE AND CEIVER POTS
CONTROLLER ENGINE ANALOG SPLITTER
FRONT END

**Fig. 3**

VoIP — IP

PPP — IP

PPP

VoATM — AAL₂ AAL₅ — AAL₅ AAL₂

ATM — ATM

Channelized
VoDSL

xDSL Physikal Layer

POTS

Baseband POTS

Costumer Premise — Network

**Fig. 4**

**Fig. 5**

**Fig. 6**

**Fig. 7**

## Principal Component Analysis Downstream direction

**Fig. 8**

**Fig. 9**

Europäisches
Patentamt

European
Patent Office

Office européen
des brevets

# EUROPEAN SEARCH REPORT

**Application Number**

EP 15 30 6194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 887 579 A1 (BAE SYSTEMS PLC [GB]) 24 June 2015 (2015-06-24)<br>* figures 3,5 *<br>* paragraph [0068] *<br>* claim 8 * | 1,3-9 | INV.<br>H04L1/20 |
| X | US 2010/246805 A1 (HAUSMAN ROBERT [US] ET AL) 30 September 2010 (2010-09-30)<br>* paragraphs [0017], [0018], [0057], [0058], [0089], [0090]; figures 11,13,14 * | 1-9 | |
| X | US 2007/217550 A1 (WU XIAOFENG [DE] ET AL) 20 September 2007 (2007-09-20)<br>* figures 4,5 * | 1-9 | |

**TECHNICAL FIELDS
SEARCHED      (IPC)**

H04L

The present search report has been drawn up for all claims

| Place of search | Date of completion of the search | Examiner |
|---|---|---|
| The Hague | 21 January 2016 | Borges, Pedro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 3 121 985 A1**

## ANNEX TO THE EUROPEAN SEARCH REPORT
## ON EUROPEAN PATENT APPLICATION NO.

EP 15 30 6194

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2016

| Patent document cited in search report | | | Publication date | Patent family member(s) | | Publication date |
|---|---|---|---|---|---|---|
| EP 2887579 | A1 | | 24-06-2015 | NONE | | |
| US 2010246805 | A1 | | 30-09-2010 | US 2003112967 A1 | | 19-06-2003 |
| | | | | US 2005105473 A1 | | 19-05-2005 |
| | | | | US 2010246805 A1 | | 30-09-2010 |
| US 2007217550 | A1 | | 20-09-2007 | DE 102006007025 A1 | | 04-10-2007 |
| | | | | US 2007217550 A1 | | 20-09-2007 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ADSL Theory,* May 2008, http://dewanoad.blogs-pot.de/2008/05/adsl-theory.html